# EUROPEAN PATENT SPECIFICATION

(11) **EP 2 866 239 B1**
(45) Date of publication and mention of the grant of the patent: **13.12.2017**
(21) Application number: 13807125.3
(22) Date of filing: 11.04.2013
(51) Int. Cl.: H01G 9/052, H01G 9/042, H01G 9/15

(54) **POSITIVE ELECTRODE BODY FOR CAPACITOR**
POSITIVELEKTRODENKÖRPER FÜR KONDENSATOR
CORPS D'ÉLECTRODE POSITIVE POUR CONDENSATEUR

(30) Priority: 22.06.2012 JP 2012140964
(43) Date of publication of application: 29.04.2015
(73) Proprietor: Showa Denko K.K., Tokyo 105-8518 (JP)
(72) Inventor: NAITO Kazumi, Tokyo 105-8518 (JP); SUZUKI Masahiro, Tokyo 105-8518 (JP)
(74) Representative: Strehl Schübel-Hopf & Partner
(86) International application number: PCT/JP2013/060897
(87) International publication number: WO 2013/190886

(56) References cited:
- EP-A1- 1 324 359
- WO-A1-02/084687
- WO-A1-2008/019992
- WO-A1-2012/086272
- WO-A1-2013/058018
- DE-A1- 3 227 726
- JP-A- H 116 060
- JP-A- H11 256 322
- JP-A- 2003 213 302
- JP-A- 2004 349 658
- JP-A- 2010 034 589
- JP-A- 2011 233 655
- US-A1- 2003 170 169
- US-A1- 2004 016 978

## Description

### TECHNICAL FIELD

The present invention relates to a tungsten anode body, the method for producing the same, and a capacitor comprising the anode body.

### BACKGROUND ART

An electrolytic capacitor is composed of a conductor (an anode body) as one electrode, a dielectric layer formed in the surface layer of the electrode, and the other electrode (semiconductor layer) provided thereon. As an example of such a capacitor, an electrolytic capacitor has been proposed, which capacitor is produced by anodically oxidizing an anode body for a capacitor comprising a sintered body made of a valve-acting metal powder which can be anodized such as tantalum to form a dielectric layer made of the oxide of the metal on an inner layer of fine pores and on the outer surface layer of the electrode, polymerizing a semiconductor precursor (monomer for conductive polymer) on the dielectric layer to form a semiconductor layer comprising a conductive polymer, and forming an electrode layer on a predetermined part on the semiconductor layer.

The electrolytic capacitor using tungsten as a valve-acting metal and employing the sintered body of the tungsten powder as an anode body can attain a larger capacitance compared to the electrolytic capacitor obtained with the same formation voltage by employing the anode body of the same volume using the tantalum powder having the same particle diameter. However, the electrolytic capacitor having the sintered body of the tungsten powder has been unpracticed as an electrolytic capacitor due to the large leakage current (LC). In order to solve this issue, a capacitor using the alloy of tungsten and other metals has been studied and has achieved some improvement in the leakage current, but it was not enough (JP-A-2004-349658 (U.S. 6,876,083 B2); Patent Document 1).

Patent Document 2 (JP-A-2003-272959) discloses a capacitor using an electrode of a tungsten foil having formed thereon a dielectric layer selected from WO₃, W₂N and WN₂, but the capacitor is not to solve the above-mentioned leakage current problem.

Also, Patent Document 3 (WO 2004/055843 (U.S. 7,154,743 B2)) discloses an electrolytic capacitor using an anode selected from tantalum, niobium, titanium and tungsten, but it does not describe a specific example using tungsten in the specification.

### PRIOR ART

### Patent Document

Patent Document 1: JP-A-2004-349658
Patent Document 2: JP-A-2003-272959
Patent Document 3: WO 2004/055843

### DISCLOSURE OF THE INVENTION

### Problems to be Solved by the Invention

An object of the present invention is to provide an anode body having a low LC (leakage current) for a capacitor using a tungsten anode body.

### Means to Solve the Problem

As a result of intensive studies to solve the above problem, the present inventors have found that a capacitor having large capacitance, being stable (little variation) in capacitance and having good leakage current (LC) characteristics can be produced by using a tungsten sintered body containing a specific amount of antimony, bismuth, or antimony and bismuth as an anode body; and have accomplished the present invention.

That is, the present invention provides a method of manufacturing an anode body of a capacitor, a capacitor, and a method for producing a capacitor as described below.

[1] A tungsten sintered anode body of a capacitor characterized by comprising tungsten and containing a total of 400 to 1,200 ppm by mass of bismuth element or antimony element.
[2] The tungsten sintered anode body as described in [1], wherein a content of bismuth element or antimony element is 350 ppm by mass or more.
[3] The tungsten sintered anode body as described in [1] or [2], further containing 7 mass% or less of silicon element.
[4] The tungsten sintered anode body as described in [3], wherein silicon element is contained as a tungsten silicide.
[5] The tungsten sintered anode body as described in any one of [1] to [4], wherein an oxygen element content in the anode body is 8 mass% or less.
[6] The tungsten sintered anode body as described in any one of [1] to [5], wherein a nitrogen element content in the anode body is 0.5 mass% or less.
[7] The tungsten sintered anode body as described in any one of [1] to [6], wherein each content of impurity elements other than bismuth, antimony, silicon, oxygen and nitrogen in the anode body is 0.1 mass% or less.
[8] A capacitor composed of the tungsten sintered anode body described in any one of [1] to [7] as one electrode, a counter electrode and a dielectric body interposed between the electrode and the counter electrode.
[9] A method for producing an anode body, which uses a sintered body obtained by molding and sintering tungsten powder as the tungsten sintered anode body described in any one of [1] to [7], wherein tungsten powder is used in which bismuth powder and/or antimony powder is mixed so as to make a total amount of bismuth element and antimony element in the anode body be 400 to 1,200 ppm by mass.
[10] The method for producing the anode body as described in [9], wherein a content of bismuth element or antimony element in the anode body is set to 350 ppm by mass or more.
[11] The method for producing the anode body as described in [9] or [10], wherein tungsten powder is used in which silicon powder is mixed so that the anode body further has a silicon element content of 7 mass% or less.
[12] The method of producing the anode body as described in any one of [9] to [11], wherein a part or whole of tungsten powder particles are granulated.

### EFFECT OF THE INVENTION

According to the present invention, a capacitor having large capacitance, being stable (having little variation) in capacitance and having good leakage current (LC) characteristics can be produced by using a tungsten sintered body containing a total of 400 to 1,200 ppm by mass of antimony and bismuth as an anode body. Furthermore, a capacitor having further improved performance can be produced by using a tungsten anode body containing silicon.

### MODE FOR CARRYING OUT THE INVENTION

The form of the tungsten anode body of the present invention is a sintered body which facilitates the formation of pores. The sintered body is obtained by molding tungsten powder followed by sintering. In this case, bismuth powder and/or antimony powder are mixed in the tungsten powder in advance so that the anode body contains a total of 400 to 1,200 ppm by mass of bismuth and antimony.

A commercially-available product can be used as a material tungsten powder. Tungsten powder having a smaller particle diameter which is more preferable can be obtained by, for example, pulverizing the tungsten trioxide powder under hydrogen atmosphere; or reducing the tungstic acid, salt thereof (ammonium tungstate and the like) and tungsten halide using a reducing agent such as hydrogen and sodium, and appropriately selecting the reducing conditions.

Also, the tungsten powder can be obtained by reducing the tungsten-containing mineral directly or through several steps and by selecting the reducing conditions.

The tungsten powder used in the present invention may be the granulated one as mentioned below (hereinafter, when tungsten powders are classified based on whether they are granulated or not, the ungranulated tungsten powder and the granulated powder are referred to as the "primary powder" and the "granulated powder", respectively.)

The volume average particle diameter of the tungsten primary powder is preferably 0.1 to 0.7 µm. The powder having the volume average particle diameter within the above-mentioned range facilitates the production of a capacitor having a large capacitance.

In a preferred embodiment of the present invention, when an anode body containing silicon element is used, the leakage current of a capacitor obtained therefrom can be further suppressed. The silicon content in the anode body is preferably 7 mass% or less, more preferably 0.05 to 7 mass%, particularly preferably 0.2 to 4 mass%.

In order to incorporate silicon element in the anode body, for example, tungsten powder blended with silicon powder is used. The silicon content in the anode body can be adjusted by controlling the blending quantity of silicon.

It is more preferably that silicon element is contained in the anode body as tungsten silicide.

An anode body containing tungsten silicide can be obtained by, for example, using tungsten powder in which a part of the particle surface is silicified. A part of the surface of the tungsten powder particles can be silicified by, for example, mixing the silicon powder well into the tungsten powder and allowing the mixture to react by heating generally at a temperature from 1,200 C° to 2,000 C° under reduced pressure of 10⁻¹ Pa or less. This method can be conducted at the same time as granulation to be described later. In the case of using this method, the silicon powder reacts with the tungsten from the surface of the tungsten particles and tungsten silicide such as W₅Si₃ tends to be formed and localized generally within 50 nm from the surface layer of the tungsten particles. Hence, the core of the primary particles remains as a highly-conducting metal, which suppresses the equal serial resistance of the anode body produced using the tungsten powder, which is preferable.

A commercially-available product can be used for any of the bismuth powder, antimony powder and silicon powder to be blended with tungsten powder.

As the bismuth powder, antimony powder and silicon powder, it is preferable to use fine powder which facilitates uniform mixing. The volume average particle diameter is preferably 0.5 to 10 µm, more preferably 0.5 to 2 µm.

When the above-mentioned tungsten powder is blended with at least one member of bismuth powder, antimony powder and silicon powder, the tungsten powder may be either of the primary powder or granulated powder. Primary powder is preferable because it is easy to be uniformly mixed.

The granulated powder can be obtained by adding at least one member of the liquid such as water and liquid resin to the primary powder so as to be made into the granules having an appropriate size; and sintering the granules by heating under reduced pressure. Specifically, the granulated powder can be produced as follows.

After allowing tungsten powder (which may be blended with bismuth powder, antimony powder and/or silicon powder) to stand at a temperature from 160 to 500°C under reduced pressure of 10⁴ Pa or less for 20 minutes to ten hours, it was returned to the atmospheric pressure at room temperature, mixed with the liquid, allowed to stand at a temperature from 1,200 to 2,000°C, preferably at 1,200 to 1,500°C under reduced pressure of 10² Pa or less for 20 minutes to ten hours, returned to the atmospheric pressure at room temperature, pulverized and classified to thereby obtain granulated powder. The volume average particle diameter of the granulated powder within a range of preferably 50 to 200 µm, more preferably 100 to 200 µm, is suitable because the powder can smoothly flow from the hopper of the molding machine to a mold.

The granulated powder may be the one in which the fine pore distribution is adjusted in the manner as JP-A-2003-213302 discloses on the case of a niobium powder.

When obtaining such a granulated powder, it is favorable to make the granulated powder so as to have a specific surface area (by BET method) of preferably 0.2 to 20 m²/g, more preferably 1.5 to 20 m²/g, by controlling the primary particle diameter because it can further increase the capacitance of the electrolytic capacitor. Also, the specific surface area of the sintered body to be described later can be adjusted by adjusting the particle diameter of the primary powder or the specific surface area of the granulated powder.

Next, the tungsten powder blended with antimony and/or bismuth is molded. For example, a molded body may be produced by blending resin for molding (such as acrylic resin) with tungsten powder and molding the mixture with a molding machine. The tungsten powder to be molded can be any of the primary powder, granulated powder, and the mixed powder of the primary powder and granulated powder. In the sintered body to be described later, the average fine pore diameter tends to be larger when more granulated powder is used, while the average fine pore diameter tends to be smaller when more primary powder is used. Also, the fine pore ratio of the sintered body to be described later can be adjusted by controlling the molding pressure.

In the molded body to be obtained, a wire material or a foil to serve as an anode lead of the capacitor element may be implanted. Examples of the material for the anode lead wire include valve-acting metal such as tantalum, niobium, titanium, tungsten and molybdenum, and alloy of valve-acting metals.

Next, a sintered body can be obtained by sintering the obtained molded body in vacuum. An example of preferred sintering conditions are the temperature from 1,300 to 2,000°C, preferably from 1,300 to 1,700°C, and more preferably from 1,400 to 1,600°C under reduced pressure for 10 to 50 minutes, more preferably for 15 to 30 minutes.

Note that, antimony and bismuth are ready to evaporate under high temperature at the time of the above-mentioned calcination and granulation. Therefore, to allow them to remain in the anode body in a desired amount, it is necessary to blend more antimony/bismuth than the desired amount with tungsten powder. A specific blending quantity can be determined by a preliminary test.

The thus-obtained anode body may further contain oxygen, nitrogen and other various elements.

The oxygen content in the anode body is preferably 8 mass% or less, more preferably 0.05 to 8 mass% and still more preferably 0.08 to 1 mass%.

The nitrogen content in the anode body is preferably 0.5 mass% or less, more preferably 0.01 to 0.5 mass% and still more preferably 0.05 to 0.3 mass%.

As a method for keeping the contents of oxygen and nitrogen within the above-mentioned ranges, nitrogen gas containing oxygen is introduced when the powder is taken out from a high temperature vacuum furnace at the time of granulation or calcination using a high temperature vacuum furnace. In case that the temperature at the time of being taken out from the high temperature vacuum furnace is lower than 280°C, oxygen is introduced in the anode body in preference to nitrogen. By feeding the gas gradually, a predetermined contents of oxygen element and nitrogen element can be obtained. In cases where the contents of oxygen element and nitrogen element (particularly oxygen element) are within the above-mentioned range, the LC characteristics of the produced electrolytic capacitors can be kept better. In the case when nitrogen is not introduced in this process, an inert gas such as argon and helium may be used instead of the nitrogen gas.

To attain better LC characteristics, it is preferable to keep the content of each of impurity elements in the anode body other than each element of bismuth, antimony, silicon, oxygen and nitrogen to 0.1 mass% or lower. In order to keep the content of these elements to the above-mentioned value or lower, the amount of the impurity elements contained in the raw materials, pulverizing media to be used, containers and the like should be closely examined.

In the sintered body used as an anode body, it is desirable to adjust the fine pore ratio, volume average fine pore diameter and specific surface area to 40 to 60 volume%, 0.6 to 0.08 µm, and 0.3 to 10 m²/g, respectively.

A dielectric layer can be formed on the surface of the anode body (including the surface inside the pores and the outer surface) by subjecting the obtained anode body to electrolytic formation. Furthermore, a capacitor element can be obtained by forming a cathode on the dielectric layer. From such a capacitor element, a capacitor composed of an anode body as one electrode, a counter electrode and a dielectric layer interposed between the electrodes. The capacitor thus produced generally becomes an electrolytic capacitor.

The above-mentioned cathode may be made of an electrolyte or a semiconductor layer.

When the cathode is made of a semiconductor layer, a solid electrolytic capacitor element can be obtained. For example, a capacitor element can be obtained by subjecting a semiconductor precursor (at least one kind selected from a monomer compound having a pyrrol, thiophene or aniline skeleton and various derivatives thereof) to multiple polymerization reactions on the dielectric layer to form a semiconductor layer comprising a conductive polymer and having a desired thickness. Furthermore, it is preferable that the capacitor element is provided with an electrode layer comprising a carbon layer and a silver layer being sequentially laminated on the semiconductor layer. By encapsulating the capacitor element, a capacitor can be obtained as a product.

### EXAMPLES

The volume average particle diameter of the tungsten powder used in Examples and Comparative Examples of the present invention; and the fine pore ratio, volume average pore diameter and BET specific surface area of the sintered body produced in Examples and Comparative Examples were measured by the methods described below.

The particle diameter was measured by using HRA9320-X100 manufactured by Microtrac Inc. and the particle size distribution was measured by the laser diffraction/scattering method. A particle size value (D₅₀; µm) when the accumulated volume % corresponded to 50 volume % was designated as the average particle size.

The fine pore ratio and BET specific surface area were measured by using NOVA2000E (manufactured by SYSMEX Corporation). With respect to the volume average pore diameter, a pore diameter value when the accumulated volume % corresponded to 50 volume % (D₅₀) was designated as the volume average pore diameter. The fine pore ratio was calculated from the measured density which was calculated from the mass and volume of each of the sintered bodies (excluding the anode lead wire) based on the assumption that the true density is 19.

The contents of elements were measured by performing ICP emission spectrometry using ICPS-8000E (manufactured by Shimadzu Corporation).

### Examples 1 to 3 and Comparative Examples 1 to 3:

Commercially-available bismuth powder having a volume average diameter of 1 µm was added in an amount shown in Table 1 to the tungsten powder having a volume average diameter of 0.5 µm obtained by reducing tungsten dioxide with hydrogen. The mixture was allowed to stand under the pressure of 10³ Pa at 300°C for 30 minutes. After the mixture was returned to atmospheric pressure at room temperature, it was mixed again and left to stand under the pressure of 10 Pa at 1,360°C for 30 minutes. After the mixture was returned to atmospheric pressure at room temperature, it was pulverized with a hammer mill and classified to thereby obtain granulated powder having a particle size of 26 to 130 µm (volume average particle diameter of 105 µm). Next, after adding 2 parts by mass of acrylic resin to the granulated powder, a molded body was produced using a molding machine TAP2 produced by Seiken Co., Ltd., in which molded body a tantalum wire having a diameter of 0.29 mmØ was implanted, and sintered under the pressure of 10 Pa at 1,420 °C for 30 minutes. The molded body was returned to atmospheric pressure at room temperature to manufacture 500 units of sintered bodies having a size of 4.45±0.10x1.5±0.04x1.0±0.05 mm (the wire is implanted in the 1.5x1.0 mm face, 6 mm of which protrudes outside the sintered body) per Example. Table 1-1 shows the bismuth content in the sintered body of each Example and Table 2 shows the fine pore ratio, volume average pore diameter and BET specific surface area of the sintered body.

### Examples 4 to 7 and Comparative Examples 4 to 5:

500 units of the sintered bodies per Example were obtained in the same way as in Example 1 except that the tungsten powder used in Example 1 was classified to obtain tungsten powder having a volume average particle diameter of 0.3 µm; a commercially available antimony powder having a volume average particle diameter of 10 µm was classified to obtain antimony powder having a particle diameter of 1 µm instead of bismuth powder; and the mixture was not left to stand at 300°C but at 1,360°C from the first. The sintered body had a size of 4.45±0.13x1.5±0.06x1.0±0.06 mm. Table 1-2 shows the antimony content in the sintered body of each Example and Table 2 shows the fine pore ratio, volume average pore diameter and BET specific surface area of the sintered body.

### Examples 8 to 12 and Comparative Examples 6 to 8:

500 units of the sintered bodies per Example were obtained in the same way as in Example 1 except that the tungsten powder used in Example 1 was classified to obtain tungsten powder having a volume average particle diameter of 0.1 µm; and antimony was added besides bismuth. The sintered body had a size of 4.44±0.08x1.5±0.08x1.0±0.07 mm. The antimony used was obtained in the same way as in Example 4. Table 1-3 shows the bismuth content and antimony content in the sintered body of each Example and Table 2 shows the fine pore ratio, volume average pore diameter and BET specific surface area of the sintered body.

### Examples 13 to 15 and Comparative Examples 9 to 10:

500 units of the sintered bodies per Example were obtained in the same way as in Example 1 except that a commercially available silicon powder (volume average particle diameter of 1 µm) was added in an amount shown in Table 1 at the time of mixing bismuth powder in Example 1. Table 1-4 shows the bismuth content and silicon content in the sintered body of each Example and Table 2 shows the fine pore ratio, volume average pore diameter and BET specific surface area of the sintered body.

### Examples 16 to 18 and Comparative Examples 11 to 12:

500 units of the sintered bodies per Example were obtained in the same way as in Example 4 except that a commercially available silicon powder (volume average particle diameter of 1 µm) was added in an amount shown in Table 1 at the time of mixing antimony powder in Example 4. Table 1-5 shows the antimony content and silicon content in the sintered body of each Example and Table 2 shows the fine pore ratio, volume average pore diameter and BET specific surface area of the sintered body.

### Examples 19 to 23 and Comparative Examples 13 to 16:

500 units of the sintered bodies per Example were obtained in the same way as in Example 8 except that a commercially available silicon powder (volume average particle diameter of 1 µm) was added in an amount shown in Table 1 at the time of mixing bismuth powder and antimony powder in Example 8. Table 1-6 shows the bismuth content, antimony content and silicon content in the sintered body of each Example and Table 2 shows the fine pore ratio, volume average pore diameter and BET specific surface area of the sintered body.

When the granulated powders of Examples 13 to 23 and Comparative Examples 9 to 16 were analyzed by X-ray diffractometer (X'pert PRO produced by PANalytical B.V.), tungsten silicide was detected in the particle surface of the granulated powder as a reaction product. Most of the detected tungsten silicide was W₅Si₃. Sputtered surface of the granulated powder was also analyzed in a similar manner and it was found that tungsten silicide as a reaction product exists in a range within 30 nm in depth from the particle surface of the granulated powder. That is, it was confirmed that silicon exists as tungsten silicide in at least a part of the surface layer of the particles of the granulated powder.

Each of the sintered bodies of Examples 1 to 23 and Comparative Examples 1 to 16 was used as an anode body of an electrolytic capacitor to thereby measure the capacitance and LC value of the capacitor. The anode body was subjected to chemical conversion in a 0.1 mass% nitric acid aqueous solution at 10 V for five hours to form a dielectric layer on the surface of the anode body. The anode body having a dielectric layer formed thereon was immersed in a 30% sulfuric acid aqueous solution, in which platinum black was provided as a cathode, to form an electrolytic capacitor to thereby measure the capacitance and LC value of the capacitor. The capacitance at room temperature, 120 Hz and bias voltage of 2.5 V was measured by using an LCR meter manufactured by Agilent. The LC value was measured 30 seconds after applying a voltage of 2.5 V at room temperature. The results of each of Examples and Comparative Examples are shown in Tables 3-1 to 3-6. Note that the values are an average value of 32 units of the capacitors per example.

As can be seen from Tables 3-1 to 3-3, as a result of using the tungsten dielectric bodies in Examples 1 to 12 produced from the sintered body of tungsten powder containing bismuth (Bi) and/or antimony (Sb) in a predetermined amount, a capacitor has little variation in capacitance, less leakage current compared to the electrolytic capacitors in Compared Examples 1 to 8 using a sintered body which does not contain a predetermined amount of Bi and/or Sb. It also can be seen that a capacitor using a tungsten dielectric body obtained by subjecting a sintered body of tungsten powder containing a predetermined amount of silicon (Examples 13 to 23) to chemical conversion has little variation in capacitance, less leakage current and a larger capacitance.

Although the functional mechanism of bismuth powder and antimony powder is not clear, it is assumed that the good dispersibility of the powder in the sintered body due to a lower boiling point than tungsten or silicon is somehow related to the little variation in capacitance of a capacitor.
[Table 1]

**Table 1-1**

| | Contents in the mixed powder (mass%) | | | Contents in the sintered body (ppm by mass) | | |
|---|---|---|---|---|---|---|
| | Bi | Sb | Si | Bi | Sb | Si |
| Example 1 | 0.2 | 0 | 0 | 410 | 0 | 0 |
| Example 2 | 0.3 | 0 | 0 | 750 | 0 | 0 |
| Example 3 | 0.5 | 0 | 0 | 1180 | 0 | 0 |
| Comparative Example 1 | 0 | 0 | 0 | 0 | 0 | 0 |
| Comparative Example 2 | 0.1 | 0 | 0 | 230 | 0 | 0 |
| Comparative Example 3 | 0.6 | 0 | 0 | 1390 | 0 | 0 |

[Table 2]

**Table 1-2**

| | Contents in the mixed powder (mass%) | | | Contents in the sintered body (ppm by mass) | | |
|---|---|---|---|---|---|---|
| | Bi | Sb | Si | Bi | Sb | Si |
| Example 4 | 0 | 0.15 | 0 | 0 | 420 | 0 |
| Example 5 | 0 | 0.2 | 0 | 0 | 680 | 0 |
| Example 6 | 0 | 0.3 | 0 | 0 | 1040 | 0 |
| Example 7 | 0 | 0.4 | 0 | 0 | 1190 | 0 |
| Comparative Example 4 | 0 | 0.1 | 0 | 0 | 370 | 0 |
| Comparative Example 5 | 0 | 0.5 | 0 | 0 | 1260 | 0 |

[Table 3]

**Table 1-3**

| | Contents in the mixed powder (mass%) | | | Contents in the sintered body (ppm by mass) | | |
|---|---|---|---|---|---|---|
| | Bi | Sb | Si | Bi | Sb | Si |
| Example 8 | 0.15 | 0.05 | 0 | 360 | 70 | 0 |
| Example 9 | 0.3 | 0.1 | 0 | 750 | 380 | 0 |
| Example 10 | 0.1 | 0.1 | 0 | 230 | 370 | 0 |
| Example 11 | 0.2 | 0.2 | 0 | 410 | 680 | 0 |
| Example 12 | 0.05 | 0.3 | 0 | 130 | 1040 | 0 |
| Comparative Example 6 | 0.1 | 0.05 | 0 | 240 | 80 | 0 |
| Comparative Example 7 | 0.3 | 0.2 | 0 | 750 | 680 | 0 |
| Comparative Example 8 | 0.05 | 0.4 | 0 | 120 | 1170 | 0 |

[Table 4]

**Table 1-4**

| | Contents in the mixed powder (mass%) | | | Contents in the sintered body (ppm by mass) | | |
|---|---|---|---|---|---|---|
| | Bi | Sb | Si | Bi | Sb | Si |
| Example 13 | 0.2 | 0 | 0.05 | 410 | 0 | 520 |
| Example 14 | 0.3 | 0 | 0.23 | 740 | 0 | 2200 |
| Example 15 | 0.5 | 0 | 3.6 | 1160 | 0 | 36000 |
| Comparative Example 9 | 0.15 | 0 | 7.5 | 340 | 0 | 75000 |
| Comparative Example 10 | 0.1 | 0 | 0.03 | 230 | 0 | 300 |

[Table 5]

**Table 1-5**

| | Contents in the mixed powder (mass%) | | | Contents in the sintered body (ppm by mass) | | |
|---|---|---|---|---|---|---|
| | Bi | Sb | Si | Bi | Sb | Si |
| Example 16 | 0 | 0.15 | 0.15 | 0 | 420 | 1500 |
| Example 17 | 0 | 0.2 | 0.89 | 0 | 680 | 8800 |
| Example 18 | 0 | 0.4 | 0.62 | 0 | 1190 | 620 |
| Comparative Example 11 | 0 | 0.5 | 0.02 | 0 | 1280 | 210 |
| Comparative Example 12 | 0 | 0.1 | 7.5 | 0 | 360 | 75000 |

[Table 6]

**Table 1-6**

| | Contents in the mixed powder (mass%) | | | Contents in the sintered body (ppm by mass) | | |
|---|---|---|---|---|---|---|
| | Bi | Sb | Si | Bi | Sb | Si |
| Example 19 | 0.15 | 0.05 | 0.05 | 360 | 70 | 520 |
| Example 20 | 0.3 | 0.1 | 0.15 | 750 | 380 | 1500 |
| Example 21 | 0.1 | 0.1 | 0.9 | 230 | 370 | 8800 |
| Example 22 | 0.2 | 0.2 | 0.22 | 410 | 680 | 2200 |
| Example 23 | 0.05 | 0.3 | 4.1 | 130 | 1040 | 41000 |
| Comparative Example 13 | 0.1 | 0.05 | 0.04 | 230 | 80 | 400 |
| Comparative Example 14 | 0.3 | 0.2 | 4.1 | 750 | 680 | 41000 |
| Comparative Example 15 | 0.3 | 0.2 | 0.04 | 750 | 680 | 400 |
| Comparative Example 16 | 0 | 0 | 0.4 | 0 | 0 | 4000 |

[Table 7]

**Table 2**

| | Fine pore ratio (%) | Average fine pore diameter (µm) | Specific surface area m²/g |
|---|---|---|---|
| Examples 1-3 and Comparative Examples 1-3 | 53±2 | 0.55±0.03 | 0.38±0.02 |
| Examples 4-7 and Comparative Examples 4-5 | 49±1 | 0.3±0.02 | 1.0±0.1 |
| Examples 8-12 and Comparative Examples 6-8 | 48±1 | 0.1±0.01 | 5.1±0.2 |
| Examples 13-15 and Comparative Examples 9-10 | 52±2 | 0.5±0.02 | 0.42±0.05 |
| Examples 16-18 and Comparative Examples 11-12 | 50±1 | 0.3±0.03 | 1.4±0.1 |
| Examples 19-23 and Comparative Examples 13-16 | 47±2 | 0.09±0.05 | 7.8±0.4 |

In Table 2, the range indicated with "±" means that the values of all the measured samples fall within the range. This holds true for other tables (Tables 3-1 to 3-6).
[Table 8]

**Table 3-1**

| | Capacitance (µF) | LC (µA) |
|---|---|---|
| Example 1 | 355±26 | 5.8 |
| Example 2 | 348±22 | 5.0 |
| Example 3 | 342±20 | 9.4 |
| Comparative Example 1 | 350±48 | 54 |
| Comparative Example 2 | 346±43 | 57 |
| Comparative Example 3 | 340±21 | 62 |

[Table 9]

**Table 3-2**

| | Capacitance (µF) | LC (µA) |
|---|---|---|
| Example 4 | 528±47 | 9.7 |
| Example 5 | 552±50 | 6.4 |
| Example 6 | 543±44 | 7.7 |
| Example 7 | 550±41 | 10.0 |
| Comparative Example 4 | 539±89 | 43 |
| Comparative Example 5 | 547±46 | 69 |

[Table 10]

**Table 3-3**

| | Capacitance (µF) | LC (µA) |
|---|---|---|
| Example 8 | 1673±137 | 10.2 |
| Example 9 | 1682±121 | 7.1 |
| Example 10 | 1705±128 | 5.5 |
| Example 11 | 1684±143 | 7.9 |
| Example 12 | 1713±122 | 11.3 |
| Comparative Example 6 | 1692±267 | 42 |
| Comparative Example 7 | 1663±145 | 70 |
| Comparative Example 8 | 1680±139 | 64 |

[Table 11]

**Table 3-4**

| | Capacitance (µF) | LC (µA) |
|---|---|---|
| Example 13 | 395±21 | 4.7 |
| Example 14 | 386±20 | 1.6 |
| Example 15 | 405±24 | 2.4 |
| Comparative Example 9 | 232±147 | 374 |
| Comparative Example 10 | 385±40 | 61 |

[Table 12]

**Table 3-5**

| | Capacitance (µF) | LC (µA) |
|---|---|---|
| Example 16 | 587±45 | 3.3 |
| Example 17 | 593±36 | 1.6 |
| Example 18 | 579±38 | 4.9 |
| Comparative Example 11 | 562±84 | 68 |
| Comparative Example 12 | 370±198 | 471 |

[Table 13]

**Table 3-6**

| | Capacitance (µF) | LC (µA) |
|---|---|---|
| Example 19 | 2047±130 | 4.6 |
| Example 20 | 2005±126 | 4.1 |
| Example 21 | 1995±118 | 1.9 |
| Example 22 | 2027±131 | 2 |
| Example 23 | 1995±119 | 5.3 |
| Comparative Example 13 | 1947±255 | 40 |
| Comparative Example 14 | 1990±133 | 74 |
| Comparative Example 15 | 1895±145 | 71 |
| Comparative Example 16 | 2003±284 | 4.7 |

### INDUSTRIAL APPLICABILITY

As a result of using an anode body comprising tungsten which contains a total of 400 to 1,200 ppm by mass of the bismuth element or the antimony element, a capacitor having little variation in capacitance, large capacitance and good LC characteristics can be produced.

## Claims

1. A tungsten sintered anode body of a capacitor **characterized by** comprising tungsten and containing a total of 400 to 1,200 ppm by mass of bismuth element or antimony element.

2. The tungsten sintered anode body as claimed in claim 1, wherein a content of bismuth element or antimony element is 350 ppm by mass or more.

3. The tungsten sintered anode body as claimed in claim 1 or 2, further containing 7 mass% or less of silicon element.

4. The tungsten sintered anode body as claimed in claim 3, wherein silicon element is contained as a tungsten silicide.

5. The tungsten sintered anode body as claimed in any one of claims 1 to 4, wherein an oxygen element content in the anode body is 8 mass% or less.

6. The tungsten sintered anode body as claimed in any one of claims 1 to 5, wherein a nitrogen element content in the anode body is 0.5 mass% or less.

7. The tungsten sintered anode body as claimed in any one of claims 1 to 6, wherein each content of impurity elements other than bismuth, antimony, silicon, oxygen and nitrogen in the anode body is 0.1 mass% or less.

8. A capacitor composed of the tungsten sintered anode body claimed in any one of claims 1 to 7 as one electrode, a counter electrode and a dielectric body interposed between the electrode and the counter electrode.

9. A method for producing an anode body, which uses a sintered body obtained by molding and sintering tungsten powder as the tungsten sintered anode body claimed in any one of claims 1 to 7, wherein tungsten powder is used in which bismuth powder and/or antimony powder is mixed so as to make a total amount of bismuth element and antimony element in the anode body be 400 to 1,200 ppm by mass.

10. The method for producing the anode body as claimed in claim 9, wherein a content of bismuth element or antimony element in the anode body is set to 350 ppm by mass or more.

11. The method for producing the anode body as claimed in claim 9 or 10, wherein tungsten powder is used in which silicon powder is mixed so that the anode body further has a silicon element content of 7 mass% or less.

12. The method of producing the anode body as claimed in any one of claims 9 to 11, wherein a part or whole of tungsten powder particles are granulated.

## Patentansprüche

1. Gesinterter Wolframanodenkörper eines Kondensators, **dadurch gekennzeichnet, dass** er Wolfram enthält und insgesamt 400 bis 1.200 Massen-ppm Bismutelement oder Antimonelement enthält.

2. Gesinterter Wolframanodenkörper nach Anspruch 1, wobei der Gehalt des Bismutelements oder Antimonelements 350 Massen-ppm oder höher ist.

3. Gesinterter Wolframanodenkörper nach Anspruch 1 oder 2, der außerdem 7 Massenprozent oder weniger Siliciumelement enthält.

4. Anspruch 3, wobei das Siliciumelement als Wolframsilicit enthalten ist.

5. Gesinterter Wolframanodenkörper nach einem der Ansprüche 1 bis 4, wobei der Sauerstoffelementgehalt in dem Anodenkörper 8 Massenprozent oder weniger ist.

6. Gesinterter Wolframanodenkörper nach einem der Ansprüche 1 bis 5, wobei der Stickstoffelementgehalt in dem Anodenkörper 0,5 Massenprozent oder weniger ist.

7. Gesinterter Wolframanodenkörper nach einem der Ansprüche 1 bis 6, wobei der jeweilige Gehalt von anderen Verunreinigungselementen als Bismut, Antimon, Silicium, Sauerstoff und Stickstoff in dem Anodenkörper 0,1 Massenprozent oder weniger ist.

8. Kondensator, der aus dem gesinterten Wolframanodenkörper nach einem der Ansprüche 1 bis 7 als eine Elektrode, einer Gegenelektrode und eines dielektrischen Körpers zwischen der Elektrode und der Gegenelektrode besteht.

9. Verfahren zum Herstellen eines Anodenkörpers, welches einen Sinterkörper, erhalten durch Formen und Sintern von Wolframpulver, als den gesinterten Wolframanodenkörper nach einem der Ansprüche 1 bis 7 verwendet, wobei Wolframpulver eingesetzt wird, worin Bismutpulver und/oder Antimonpulver so gemischt ist, dass die Gesamtmenge von Bismutelement und Antimonelement in dem Anodenkörper 400 bis 1.200 Massen-ppm wird.

10. Verfahren zum Herstellen des Anodenkörpers nach Anspruch 9, wobei der Gehalt an Bismutelement oder Antimonelement in dem Anodenkörper auf 350 Massen-ppm oder mehr festgelegt wird.

11. Verfahren zum Herstellen des Anodenkörpers nach Anspruch 9 oder 10, wobei Wolframpulver eingesetzt wird, worin Siliciumpulver so gemischt ist, dass der Anodenkörper außerdem einen Siliciumelementgehalt von 7 Massen-ppm oder weniger aufweist.

12. Verfahren zum Herstellen des Anodenkörpers nach einem der Ansprüche 9 bis 11, wobei ein Teil der oder alle Wolframpulverteilchen granuliert sind.

## Revendications

1. Corps d'anode fritté de tungstène d'un condensateur, **caractérisé en ce qu'**il comprend du tungstène et contient un total de 400 à 1200 ppm par masse de l'élément de bismuth ou de l'élément d'antimoine.

2. Corps d'anode fritté de tungstène selon la revendication 1, dans lequel une teneur en élément de bismuth ou en élément d'antimoine est de 350 ppm par masse, ou plus.

3. Corps d'anode fritté de tungstène selon la revendication 1 ou 2, contenant en outre 7 % en masse, ou moins, de l'élément de silicium.

4. Corps d'anode fritté de tungstène selon la revendication 3, dans lequel l'élément de silicium est contenu sous la forme d'un siliciure de tungstène.

5. Corps d'anode fritté de tungstène selon l'une quelconque des revendications 1 à 4, dans lequel une teneur en élément d'oxygène dans le corps d'anode est de 8 % en masse, ou moins.

6. Corps d'anode fritté de tungstène selon l'une quelconque des revendications 1 à 5, dans lequel une teneur en élément d'azote dans le corps d'anode est de 0,5 % en masse, ou moins.

7. Corps d'anode fritté de tungstène selon l'une quelconque des revendications 1 à 6, dans lequel chaque teneur en éléments d'impureté autres que le bismuth, l'antimoine, le silicium, l'oxygène et l'azote dans le corps d'anode est de 0,1 % en masse, ou moins.

8. Condensateur composé du corps d'anode fritté de tungstène selon l'une quelconque des revendications 1 à 7 comme première électrode, d'une contre-électrode et d'un corps diélectrique interposé entre l'électrode et la contre-électrode.

9. Procédé de production d'un corps d'anode, qui utilise un corps fritté obtenu en moulant et en frittant une poudre de tungstène comme corps d'anode fritté de tungstène selon l'une quelconque des revendications 1 à 7, dans lequel on utilise la poudre de tungstène dans laquelle de la poudre de bismuth et/ou de la poudre d'antimoine est mélangée de manière à obtenir une quantité totale de l'élément de bismuth et de l'élément d'antimoine dans le corps d'anode comprise entre 400 et 1200 ppm par masse.

10. Procédé de production du corps d'anode selon la revendication 9, dans lequel une teneur en élément de bismuth ou en élément d'antimoine dans le corps d'anode est fixée à 350 ppm par masse, ou plus.

11. Procédé de production du corps d'anode selon la revendication 9 ou 10, dans lequel on utilise de la poudre de tungstène dans laquelle de la poudre de silicium est mélangée de telle sorte que le corps d'anode présente en outre une teneur en élément de silicium de 7 % en masse, ou moins.

12. Procédé de production du corps d'anode selon l'une quelconque des revendications 9 à 11, dans lequel une partie ou la totalité des particules de poudre de tungstène est granulée.
